# EUROPEAN PATENT SPECIFICATION

(11) **EP 4 197 854 B1**
(45) Date of publication and mention of the grant of the patent: **21.01.2026**
(21) Application number: 22207444.5
(22) Date of filing: 15.11.2022
(51) Int. Cl.: B60N 2/00, B60N 2/38, B60N 2/50

(54) **VEHICLE SUSPENDED SEATS**
HÄNGENDE FAHRZEUGSITZE
SIÈGES SUSPENDUS POUR VÉHICULES

(30) Priority: 20.12.2021 GB 202118536
(43) Date of publication of application: 21.06.2023
(73) Proprietor: AGCO International GmbH, 8212 Neuhausen am Rheinfall (CH)
(72) Inventor: STALLMEIER, Dirk, 87616 Marktoberdorf (DE)
(74) Representative: AGCO Intellectual Property Department

(56) References cited:
- US-A- 3 797 798
- US-A1- 2016 052 431
- US-A1- 2020 156 518

## Description

### FIELD

Aspects of the invention relate to vehicle seats which are mounted to an associated vehicle via a spring suspension system. Such seats are designed to isolate the driver from the vibrations present within the body of the vehicle and are not normally designed for use when the seat is not occupied.

### BACKGROUND

Increasingly, certain types of vehicle, for example agricultural tractors, are being called upon to operate in a driverless manner. For example, in the so-called leader-follower mode in which a tractor follows a leading machine copying or augmenting the operation of the lead machine. Other examples include autonomous driving and remotely controlled operation. Use of the vehicle with an unoccupied seat can lead to mechanical failures of the seat suspension system due to forces occurring within the seat assembly which it is not designed to withstand.

US 3, 797, 798 discloses a vehicle seat having a suspension and a mechanical arrangement that enable the seat to be manually locked in or near its uppermost position to prevent the seat from lowering unintentionally when overloaded.

US 2020/0156518 A1 discloses vehicle seat having a system for automatically adjusting the height of the seat. The system includes a sensor arrangement for detecting whether the seat is occupied. When the system determines that the seat is unoccupied, the automatic height adjustment is turned off and the seat moves to is uppermost position or to its lowermost position.

US 2016/0052431 A1 discloses a vehicle seat having a suspension system with an active damper. A damper control module analyses data corresponding to a condition of the seat to determine the natural frequency of the seat in that condition. The damper control module receives mass data relating to the mass of the seat from which it can determine whether the seat is occupied. If the seat is determined to be unoccupied, the damper control module sets the natural frequency of the damper to be a maximum natural frequency value.

### BRIEF SUMMARY

According to an aspect of the present invention, there is provided a vehicle as defined in claim 1. Further optional features are set out in the claims dependent on claim 1.

The safe mode is configured to avoid damage to the spring suspension system due to forces generated within the suspension system of an unoccupied seat.

This can be particularly advantageous when the vehicle is operated in a mode which does not require a diver/operator to be present, such as a leader-follower mode, and autonomous driving mode or a remote control mode.

The vehicle may be a utility vehicle or mobile machine. The vehicle may be an agricultural vehicle or mobile machine, such as a tractor or combine harvester, sprayer or the like. The vehicle may be a construction vehicle or mobile machine, such as an excavator, digger, or the like.

### BRIEF DESCRIPTION OF THE DRAWINGS

One or more embodiments of the disclosure will now be described, by way of example only, with reference to the accompanying drawings, in which:
Figure 1 shows diagrammatically two tractors following a lead tractor in a so-called leader-follower mode of operation;
Figure 2 shows a side view of a typical tractor seat assembly including a seat mounted on an air suspension spring and a seat locking actuator shown diagrammatically adjacent to the seat assembly;
Figure 3 shows diagrammatically the seat and actuator of Figure 2 with the seat in its maximum height, minimum height and interim height positions, and
Figure 4 shows a control algorithm for determining when the safe mode of the present invention should be invoked.

### DETAILED DESCRIPTION

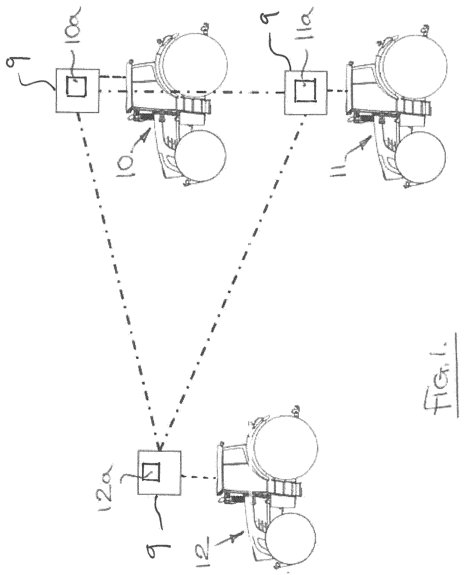

Referring to the drawings, a typical tractor formation when operating in the so called leader-follower mode is shown in Figure 1 in which two tractors 10 and 11 follow lead tractor 12. The three tractors are interconnected wirelessly via respective control units 10a, 11a and 12a so that follower tractors 10 and 11 can carry out the same tasks as the lead tractor 12 or can be programmed to carry out complementary tasks without the need for tractors 10 and 11 to carry their own driver. The control units 10a, 11a, 12a may form part of a control system of the respective tractor, indicated schematically at 9. The control system 9 (also referred to as an infrastructure control system) will typically include one or more controllers (ECU) and devices interconnected and communicating via a controller area network (CAN bus) or via a communications medium using other standard or proprietary communication protocols (e.g., RS 232, etc.). Communication may be achieved over a wired medium, wireless medium, or a combination of wired and wireless media.

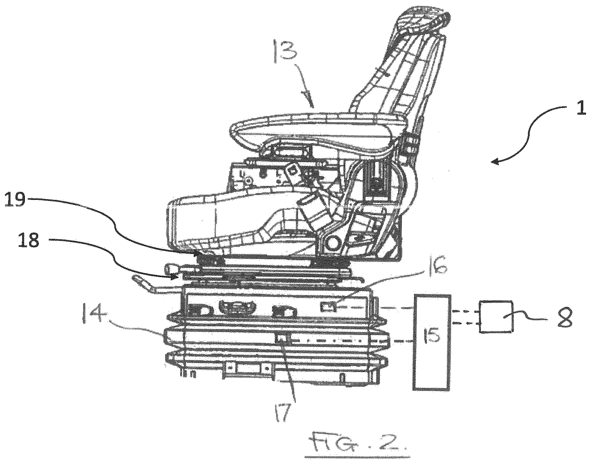

Each tractor has a driver's seat assembly 1, a typical example of which is shown in Figure 2. The seat assembly 1 includes a seat 13 mounted on a suspension spring 14 which forms part of a suspension system for isolating the driver from vibrations present within the tractor body during use. Typically, the spring 14 is an air filled bellows which enables the height of the seat to be easily adjusted for different operators in addition to isolating the driver from vibrations but other types of spring may be used. A rotary adaptor 18 is located between the spring 14 and the seat 13 that enables the seat 13 to be swivelled about a vertical axis. In addition, the seat assembly 1 also comprises a lateral suspension system 19 (sometimes referred to as a lateral or side to side isolation system). The lateral suspension system 19 enables the seat to move laterally by a limited amount against a spring or damping force and helps to isolate the driver from vibrations in a lateral direction with respect to the normal driving direction. The lateral suspension system may include at least one air filled suspension spring (e.g. a gas filled strut) which is arranged between the seat cushion and the rotary adaptor 18.

It should be appreciated that a seat assembly 1 according to the present disclosure can take other forms and may not comprise all of the above features. For example, the seat assembly 1 may not be provided with a lateral suspension system 19 and/or a rotary adaptor 18.

The driver's seat assembly 1 has a safe mode of operation into which the seat assembly can be placed when the seat is unoccupied, especially whilst the vehicle is in use, to avoid damage to the seat and/or the spring suspension system due to forces generated within the suspension system of an unoccupied vehicle seat assembly.

In accordance with the invention, the seat assembly 1 is communicatively connected with the control system 9 of the associated vehicle 10, 11, 12 and is arranged to invoke the safe mode when the associated vehicle is placed in a predetermined operating mode which usually does not require a driver/operator to be present in the vehicle and where the vehicle seat is, therefore, expected to be unoccupied. In a non-limiting example, the predetermined operating mode which invokes the safe mode may include any one or more of the following: leader-follower mode, autonomous driving mode and remote control mode.

When the safe mode is invoked this will involve one or more of the following actions:
- locking the seat or seat assembly in a specific position;
- setting specific operating characteristics such as damping or spring rate of the seat suspension 14;
- locking or unlocking specific seat functions, and
- invoking a specific control mode for specified seat assembly functions.

The vehicle seat assembly 1 may have a controller indicted schematically at 8 which is operatively connected with (in communication with) the control system 9 of the vehicle (10, 11, 12) and which is operative to place the seat assembly into and out of its safe mode. The seat assembly controller 8 may be part of the seat assembly itself or may be provided elsewhere in the vehicle and operatively connected with the seat assembly 1 in order to control one or more seat assembly functions.

The controller 8 may be in the form of an ECU which provides the control logic for the seat assembly 1. In one embodiment, the controller 8 comprises one or more processors, input/output (I/O) interface(s), and memory, all coupled to one or more data busses. The memory may include any one or a combination of volatile memory elements (e.g., random-access memory RAM, such as DRAM, and SRAM, etc.) and non-volatile memory elements (e.g., ROM, hard drive, tape, CDROM, etc.). The memory may store a native operating system, one or more native applications, emulation systems, or emulated applications for any of a variety of operating systems and/or emulated hardware platforms, emulated operating systems, etc. In one embodiment the memory comprises an operating system and seat assembly operating software. It should be appreciated by one having ordinary skill in the art that in some embodiments, additional or fewer software modules (e.g., combined functionality) may be employed in the memory or additional memory. In some embodiments, a separate storage device may be coupled to the data bus, such as a persistent memory (e.g., optical, magnetic, and/or semiconductor memory and associated drives).

The processor may be embodied as a custom-made or commercially available processor, a central processing unit (CPU) or an auxiliary processor among several processors, a semiconductor based microprocessor (in the form of a microchip), a macro processor, one or more application specific integrated circuits (ASICs), a plurality of suitably configured digital logic gates, and/or other well-known electrical configurations comprising discrete elements both individually and in various combinations to coordinate the overall operation of the controller 26.

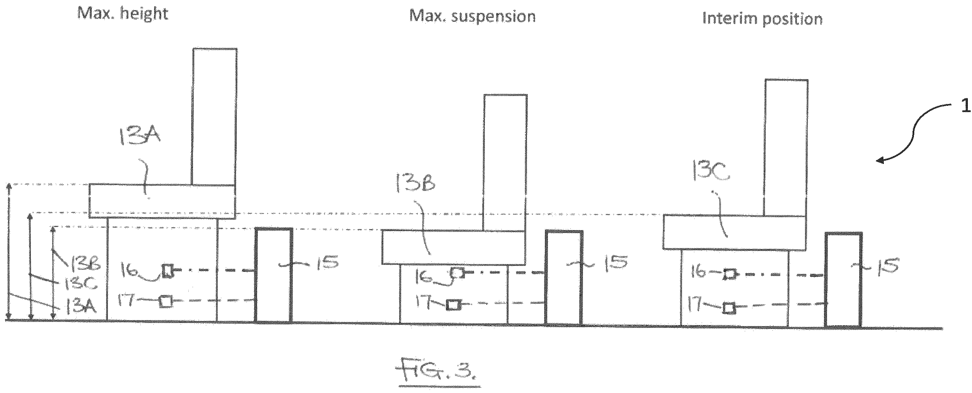

In an embodiment where the safe mode involves locking the seat 13 in a specific position, an actuator, shown diagrammatically at 15 in Figure 2, is operative to control engagement of a stop 17 to lock the seat 13 in a predetermined position to place the seat assembly in the safe mode. Typically the seat 13 is locked in an intermediate position 13C (see Figure 3) which lies between its maximum and minimum height positions 13A and 13B respectively. Operation of the actuator 17 is regulated by the vehicle seat controller 8 in dependence on the operating mode of the vehicle 10, 11, 12. For example, the seat assembly controller 8 may provide one or more control signals to cause the actuator 15 to engage the stop 17 to place the seat assembly in the safe more when the vehicle enters a mode of operation in which the vehicle seat 13 is expected to be unoccupied, such as a leader-follower mode (i.e. where the vehicle 10, 11 is automatically following a lead vehicle), autonomous driving mode or remote control mode. The seat assembly controller 8 may be configured to take the seat assembly 1 out of the safe mode if the vehicle operating mode changes to one in which the seat is expected to be occupied, that is to say the vehicle operating mode is not one of the predetermined operating modes that trigger the safe mode. A sensor 16 may be provided (see Figure 2) which detects the occupancy state of the seat 13. The sensor 16 may be used to confirm that the vehicle seat is not occupied when the vehicle enters a mode which triggers the seat assembly 1 entering the safe mode. However, the system can additionally be configured so that the seat assembly 1 is placed in the safe mode depending on the occupancy status of the seat 13 as detected by the sensor 16 even when the vehicle is not in a predetermined mode of operation. In an embodiment, operation of the stop 17 is coupled to the activation status of the vehicle. For example, if the vehicle is switched on and no driver is sitting on the seat 13 the stop 17 may be automatically activated. If the vehicle is switched off then the stop 17 may be deactivated and the seat may be moved into a predetermined (e.g. most relaxed) position.

In the above embodiment, the seat assembly 1 is arranged so that when a driver of the tractor leaves the seat 13, or the system determines the seat is unoccupied due to the operating mode of the vehicle, the seat 13 is prevented from moving into its maximum height position 13A but is kept in the intermediate position 13B by the mechanical stop 17. In an embodiment, the stop 17 is deactivated when the driver returns to his seat 13 as detected by the sensor 16, or the mode of operation of the vehicle changes to one in which a driver is expected to be present, so that the normal operation of the suspension of the seat returns. The stop 17 may also be engaged/disengaged manually, say by the driver.

Alternatively, or additionally, the safe mode may include locking the rotary adapter 18 to prevent the seat 13 from rotating and colliding with other components or the boundaries of the cabin when the seat 13 is unoccupied. Similarly, the lateral suspension 19 could be locked in the safe mode and unlocked for normal use when the vehicle is not operating in a predetermined mode and/or the seat 13 is occupied.

In a further alternative, the safe mode may involve adjusting settings of the seat assembly such as the damping or spring rate of the spring suspension system 14. This can include controlling the seat 13 and the suspension system 14 to assume a certain damping mode in which the pressure of the air spring 14 is maximized to minimize wear and tear damage during operation of the vehicle with the seat unoccupied.

Once the seat 13 is reoccupied or the vehicle operating mode changed to one in which the seat is expected to be occupied, the configuration of some or all of the above functions may be reversed. For example, functions that are locked in the safe mode may be unlocked and adjusted settings, such as damping or spring rate, can be returned to normal. Thus the safe mode can be automatically invoked and revoked as and when the seat 13 is vacated and re-occupied and/or dependent on the mode of operation of the vehicle. This might be especially advantageous if the operator is switching multiple times between the different vehicles during a work day or where the operating mode of the vehicle is being changed regularly. In this embodiment, the safe mode may activated or deactivated in dependency on the output from the seat occupancy sensor 16 as well as in dependency on the mode of operation of the vehicle.

In an embodiment, the seat assembly 1 can also be placed in its safe mode manually when required.

The vehicle control system 9 may send a request to the seat assembly 1, e.g. to the seat assembly controller 8, to place the seat assembly 1 in the safe mode whenever the vehicle 10, 11 enters an operating mode which does not require a driver/operator to be present. Alternatively, the seat assembly 1 may not have a dedicated controller and the vehicle control system 9 be configured to automatically place the seat assembly in the safe mode when the vehicle is placed in a predetermined operating mode. The vehicle control system 9 may, for example, be configured to control actuation of the mechanical stop 17 via the actuator 15 in the embodiment described above. Where a vehicle 10, 11 is being used as a follower vehicle in a leader-follower operation, the adjustment to the safe mode can be controlled and started by the leader vehicle 12, which is in communication with the follower vehicle 10, 11. The leader vehicle 12 can, for example, send a control signal to the follower vehicle or vehicles 10, 11 to prepare a leader-follower operation, which includes the adjustment of certain vehicle parameters of the following vehicle (s) and which includes placing the seat assembly 1 in the safe mode. In other embodiments, the seat assembly 1 may atomically recognise when the vehicle enters an operating mode which does not require a driver/operator to be present and apply the safe mode. In this arrangement, the seat assembly will typically have its own controller 8.

In addition to a safe mode, specific control modes for specified functions may be adopted for the seat assembly 1. This can include controlling the seat 13 and the suspension system 14 to assume a certain damping mode in which the pressure of the air spring 14 is maximized to minimize wear and tear damage during operation of the vehicle in extreme operating situations. An alternative mode is energy saving mode, whereby the energy consumption of the seat assembly 1 is minimized by deactivating systems not required by the current operating conditions. For example, an active suspension system may be deactivated when the operating conditions are not placing much demand on the active suspension. This mode may be advantageous during light operating conditions like snow clearing or simple transport tasks on asphalt streets. In contrast, another mode of control may be configured to maximize operation of the suspension system, say when the vehicle is used in heavy terrain. Such a mode may include an activation of the active suspension system and an unlocking of the lateral suspension 19 of the seat. This aspect may be adopted with or without a safe mode.

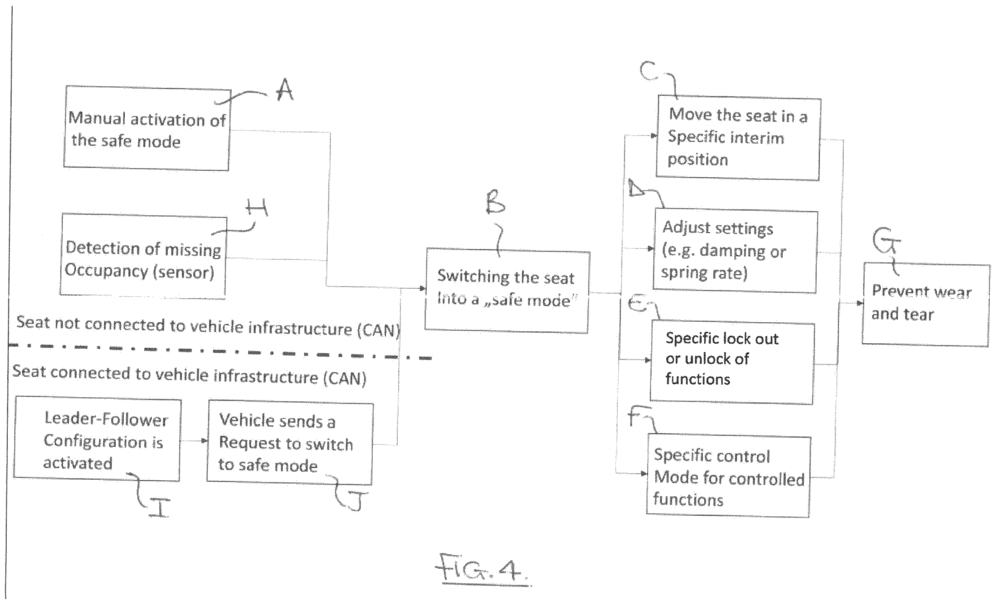

Figure 4 shows several examples of an algorithm suitable for use in controlling the operation of a suspended seat in accordance with the principles of the present invention.

In a simple arrangement not according to the invention, the safe mode of the seat assembly is activated manually as indicated at box A and the seat assembly 1 is switched into safe mode as indicated by box B, typically invoking one or more of the actions set out in boxes C to F. This results in reduced wear and tear on the seat as indicated by box G. Alternatively, switching of the seat into a safe mode may be initiated in response to a sensor detecting that the seat is not occupied as indicated in box H or, according to the invention, by the vehicle entering a predetermined vehicle operating mode in which it is likely the seat will be unoccupied as indicated by box I. This may cause the vehicle control system to send a request to the seat assembly 1 to adopt the safe mode as indicated by box J. In a further embodiment, a user may also be able to place the seat assembly in a safe mode via an input in a HMI of the vehicle control system. In some embodiments, it may be possible to place the seat assembly 1 in a safe mode using any one of two or more of the above methods. For example, a seat assembly according to the invention can be configured so that the safe mode can be actuated by a manual activation A or in dependence on a signal from a seat occupant sensor H in addition to the safe mode being actuated response to the vehicle being placed in a predetermined operating mode I.

The present invention thus provides a simple and effective solution which prevents damage to a suspended vehicle seat 13 when the vehicle is operated without any driver on the seat.

While the present invention has been described herein with respect to certain illustrated embodiments, those of ordinary skill in the art will recognize and appreciate that it is not so limited. Rather, many additions, deletions, and modifications to the illustrated embodiments may be made without departing from the scope of the invention as hereinafter claimed. In addition, features from one embodiment may be combined with features of another embodiment while still being encompassed within the scope as defined by the appended claims.

## Claims

1. A vehicle (10) having a seat assembly (1) and an electronic control system (9) in communication with the seat assembly (1), the seat assembly comprising a vehicle seat (13) mounted on a suspension system (14), the seat assembly having a safe mode into which the seat assembly can be placed when the seat is unoccupied to avoid damage to at least one of the seat and the suspension system due to forces generated within the suspension system of an unoccupied vehicle seat, wherein placing the seat assembly in safe mode involves one or more of the following actions:
a. locking the seat (13) in a specific position;
b. setting at least one specific operating characteristics such as damping or spring rate;
c. locking or unlocking at least one seat function (18; 19), and
d. invoking a specific control mode for specified seat assembly functions;
**characterised in that** vehicle is configured such that the seat assembly is automatically placed in the safe mode in response to a determination by the electronic control system (9) that the vehicle has entered a predetermined operating mode not requiring the vehicle seat to be occupied.

2. A vehicle (10) according to claim 1, wherein the seat assembly (10) is also configured to be placed in its safe mode manually.

3. A vehicle (10) according to claim 1, wherein the seat assembly (1) is provided with a sensor (16) configured to detect an occupancy state of the seat (13), the vehicle being additionally configured to automatically invoke the safe mode when the sensor detects that the seat (13) is unoccupied and the vehicle is switched on.

4. A vehicle (10) according to claim 1, wherein the seat assembly (1) includes a sensor (16) for detecting an occupancy state of seat (13), the vehicle being configured such that when it is switched on and the sensor detects that the vehicle seat is unoccupied, a seat stop (17) is automatically activated to limit movement of the seat.

5. A vehicle (10) according to claim 4, wherein the seat assembly (1) is configured such that if the vehicle (10) is subsequently switched off, the stop (17) is deactivated and/or the seat (13) is moved into a predetermined position.

6. A vehicle (10) as claimed in claim 4, configured such that if the sensor (16) detects that the seat (13) is subsequently occupied, the stop (17) is deactivated.

7. A vehicle (10) according to claim 1, wherein the seat suspension (14) enables the vehicle seat (13) to move through a range of vertical movement between a maximum height position and a minimum height position when the seat assembly (1) is not in the safe mode, the arrangement configured such that placing the seat assembly in safe mode involves actuating a mechanical stop (17) to prevent the seat (13) moving to its maximum height position and hold the seat in an intermediate position between its maximum and minimum height positions.

8. A vehicle (10) as claimed in claim 7, wherein, the vehicle is configured such that if, following actuation of the mechanical stop, it is determined the vehicle is no longer in the predetermined operating mode, the mechanical stop (17) is deactivated to enable the seat (13) to move over its full range of vertical movement as permitted by the suspension system.

9. A vehicle (10) according to any one of the preceding claims, in which the predetermined operating mode is selected from the following:
a. a leader-follower mode;
b. an autonomous driving mode; and/or
c. a remote control mode.

10. A vehicle (10) according to any one of the preceding claims wherein placing the seat assembly (1) in the safe mode involves locking or unlocking of at least one seat function, the at least one seat function which is locked or unlocked comprising one or more of the following:
a. a rotary adapter (18); and
b. a lateral suspension (19).
c. an active suspension (14).

11. A vehicle (10) according to any one of the preceding claims , wherein placing the seat assembly (1) in the safe mode involves invoking a specific control mode for specified seat assembly functions, the specific control mode comprising one or more of the following:
a. an energy consumption minimization mode;
b. a wear and tear minimization mode; and
c. a suspension maximization mode.

## Patentansprüche

1. Fahrzeug (10) mit einer Sitzbaugruppe (1) und einem elektronischen Steuersystem (9), welches mit der Sitzbaugruppe (1) kommuniziert, wobei die Sitzbaugruppe einen Fahrzeugsitz (13) aufweist, der auf einem Aufhängungssystem (14) montiert ist, wobei die Sitzbaugruppe einen Sicherheitsmodus aufweist, in den die Sitzbaugruppe gebracht werden kann, wenn der Sitz nicht belegt ist, um eine Beschädigung des mindestens einen Sitzes und/oder des Aufhängungssystems infolge von Kräften, die innerhalb des Aufhängungssystems eines nicht belegten Fahrzeugsitzes erzeugt werden, zu vermeiden, wobei das Überführen der Sitzbaugruppe in den Sicherheitsmodus mindestens eine der folgenden Aktionen bedingt:
a. Verriegeln des Sitzes (13) in einer spezifischen Position;
b. Vorgabe mindestens eines spezifischen Betriebsparameters wie beispielsweise eine Dämpfung oder eine Federkonstante;
c. Verriegeln oder Entriegeln mindestens einer Sitzfunktion (18; 19), und/oder
d. Aktivieren eines spezifischen Steuermodus für spezifische SitzbaugruppenFunktionen;
**dadurch gekennzeichnet, dass** das Fahrzeug derart konfiguriert ist, dass die Sitzbaugruppe automatisch in den Sicherheitsmodus gebracht wird in Reaktion auf die Feststellung durch das elektronische Steuersystem (9), dass das Fahrzeug einen vorbestimmten Betriebsmodus eingenommen hat, welcher nicht erfordert, dass der Fahrzeugsitz belegt ist.

2. Fahrzeug (10) nach Anspruch 1, wobei die Sitzbaugruppe (10) auch dafür konfiguriert ist, manuell in ihren Sicherheitsmodus gebracht zu werden.

3. Fahrzeug (10) nach Anspruch 1, wobei die Sitzbaugruppe (1) mit einem Sensor (16) ausgestattet ist, der dazu konfiguriert ist, einen Belegungsstatus des Sitzes (13) zu detektieren, wobei das Fahrzeug zusätzlich dazu konfiguriert ist, automatisch den Sicherheitsmodus zu aktivieren, wenn der Sensor detektiert, dass der Sitz (13) nicht belegt ist und das Fahrzeug angeschaltet ist oder wird.

4. Fahrzeug (10) nach Anspruch 1, wobei die Sitzbaugruppe (1) einen Sensor (16) zum Detektieren eines Belegungszustands des Sitzes (13) aufweist, wobei das Fahrzeug dazu konfiguriert ist, dass dann, wenn dieses angeschaltet ist oder wird und der Sensor detektiert, dass der Fahrzeugsitz nicht belegt ist, automatisch ein Sitzanschlag (17) zur Begrenzung der Bewegung des Sitzes aktiviert wird.

5. Fahrzeug (10) nach Anspruch 4, wobei die Sitzbaugruppe (1) derart konfiguriert ist, dass dann, wenn das Fahrzeug (10) anschließend abgeschaltet wird, der Anschlag (17) deaktiviert wird und/oder der Sitz (13) in eine vorbestimmte Position bewegt wird.

6. Fahrzeug (10) nach Anspruch 4, welches dazu konfiguriert ist, dass dann, wenn der Sensor (16) detektiert, dass der Sitz (13) anschließend belegt wird, der Anschlag (17) deaktiviert wird.

7. Fahrzeug (10) nach Anspruch 1, wobei die Sitzaufhängung (14) ermöglicht, dass sich der Fahrzeugsitz (13) über einen Bereich einer vertikalen Bewegung zwischen einer maximalen Höhenposition und einer minimalen Höhenposition bewegt, wenn sich die Sitzbaugruppe (1) nicht in dem Sicherheitsmodus befindet, wobei die Anordnung dazu konfiguriert ist, dass das Überführen der Sitzbaugruppe in den Sicherheitsmodus ein Betätigen eines mechanischen Anschlags (17) beinhaltet zur Vermeidung, dass sich der Sitz (13) in seine maximale Höhenposition bewegt, und zum Halten des Sitzes in einer Zwischenposition zwischen seiner maximalen Höhenposition und seiner minimalen Höhenposition.

8. Fahrzeug (10) nach Anspruch 7, wobei das Fahrzeug dazu konfiguriert ist, dass dann, wenn anschließend an die Betätigung des mechanischen Anschlags ermittelt wird, dass das Fahrzeug nicht länger in dem vorbestimmten Betriebsmodus ist, der mechanische Anschlag (17) deaktiviert wird, um zu ermöglichen, dass sich der Sitz (13) über seinen gesamten Bereich der vertikalen Bewegung bewegt, wie dies durch das Aufhängungssystem zugelassen wird.

9. Fahrzeug (10) nach einem der vorhergehenden Ansprüche, bei dem der vorbestimmte Betriebsmodus aus den folgenden Betriebsmoden ausgewählt wird:
a. einem Anführer-Folger-Modus;
b. einem autonomen Antriebs- oder Fahrmodus; und/oder
c. einem Fernsteuermodus.

10. Fahrzeug (10) nach einem der vorhergehenden Ansprüche, wobei die Überführung der Sitzbaugruppe (1) in den Sicherheitsmodus ein Verriegeln oder Entriegeln mindestens einer Sitzfunktion umfasst, wobei die mindestens eine Sitzfunktion, die verriegelt oder entriegelt wird, das Folgende aufweist:
a. einen Drehadapter (18) und/oder
b. eine laterale Aufhängung (19) und/oder
c. eine aktive Aufhängung (14).

11. Fahrzeug (10) nach einem der vorhergehenden Ansprüche, wobei das Überführen der Sitzbaugruppe (1) in den Sicherheitsmodus das Aktivieren eines spezifischen Steuermodus für spezifische Sitzbaugruppenfunktionen umfasst, wobei der spezifische Steuermodus das Folgende aufweist:
a. einen Energieverbrauch-Minimierungsmodus und/oder
b. eine Verschleiß- und Riss-Minimierungsmodus und/oder
c. einen Aufhängungs-Maximierungsmodus.

## Revendications

1. Véhicule (10) comportant un ensemble de siège (1) et un dispositif de commande électronique (9) en communication avec l'ensemble de siège (1), l'ensemble de siège comprenant un siège de véhicule (13) monté sur un dispositif de suspension (14), l'ensemble de siège présentant un mode sécurisé dans lequel l'ensemble de siège peut être positionné lorsque le siège est inoccupé de manière à éviter d'endommager au moins l'un du siège et du dispositif de suspension du fait d'efforts produits à l'intérieur du dispositif de suspension d'un siège de véhicule inoccupé, dans lequel le positionnement de l'ensemble de siège dans le mode sécurisé implique une ou plusieurs des actions suivantes :
a. le verrouillage du siège (13) dans une position spécifique ;
b. le réglage d'au moins une caractéristique de fonctionnement spécifique telle que le facteur d'amortissement ou d'élasticité ;
c. le verrouillage ou le déverrouillage d'au moins une fonction de siège (18 ; 19), et
d. l'entrée dans un mode de commande spécifique à des fonctions d'ensemble de siège spécifiées ;
**caractérisé en ce que** le véhicule est configuré de telle sorte que l'ensemble de siège est positionné automatiquement dans le mode sécurisé en réponse à la détermination, par le dispositif de commande électronique (9), du fait que le véhicule est entré dans un mode de fonctionnement prédéterminé n'exigeant pas que le siège de véhicule soit occupé.

2. Véhicule (10) selon la revendication 1, dans lequel l'ensemble de siège (1) est aussi configuré de manière à être positionné manuellement dans son mode sécurisé.

3. Véhicule (10) selon la revendication 1, dans lequel l'ensemble de siège (1) comporte un capteur (16) configuré de manière à détecter un état d'occupation du siège (13), le véhicule étant, de plus, configuré de manière à entrer automatiquement dans le mode sécurisé lorsque le capteur détecte que le siège (13) est inoccupé et que le véhicule est en service.

4. Véhicule (10) selon la revendication 1, dans lequel l'ensemble de siège (1) comporte un capteur (16) afin de détecter un état d'occupation du siège (13), le véhicule étant configuré de telle sorte que, lorsqu'il est en service et que le capteur détecte que le siège de véhicule est inoccupé, une butée de siège (17) est activée automatiquement afin de limiter le mouvement du siège.

5. Véhicule (10) selon la revendication 4, dans lequel l'ensemble de siège (1) est configuré de telle sorte que si le véhicule (10) est ultérieurement mis hors service, la butée (17) est désactivée et/ou le siège (13) est déplacé dans une position prédéterminée.

6. Véhicule (10) selon la revendication 4, configuré de telle sorte que si le capteur (16) détecte que le siège (13) est ultérieurement occupé, la butée (17) est désactivée.

7. Véhicule (10) selon la revendication 1, dans lequel la suspension de siège (14) permet le déplacement du siège (13) sur une plage de mouvement vertical entre une position verticale maximum et une position verticale minimum lorsque l'ensemble de siège (1) n'est pas dans le mode sécurisé, l'agencement étant configuré de telle sorte que le positionnement de l'ensemble de siège dans le mode sécurisé implique l'activation d'une butée mécanique (17) de manière à empêcher le déplacement du siège (13) vers sa position verticale maximum et à maintenir le siège dans une position intermédiaire entre ses positions verticales maximum et minimum.

8. Véhicule (10) selon la revendication 7, dans lequel, le véhicule est configuré de telle sorte que si, suite à l'activation de la butée mécanique, il est déterminé que le véhicule n'est plus dans le mode de fonctionnement prédéterminé, la butée mécanique (17) est désactivée afin de permettre le déplacement du siège (13) sur la totalité de sa plage de mouvement vertical comme le permet le dispositif de suspension.

9. Véhicule (10) selon l'une quelconque des revendications précédentes, dans lequel le mode de fonctionnement prédéterminé est sélectionné à partir des suivants :
a. un mode meneur-suiveur ;
b. un mode de conduite autonome ; et/ou
c. un mode de commande à distance.

10. Véhicule (10) selon l'une quelconque des revendications précédentes, dans lequel le positionnement de l'ensemble de siège (1) dans le mode sécurisé implique le verrouillage ou le déverrouillage d'au moins une fonction de siège, la au moins une fonction de siège qui est verrouillée ou déverrouillée comprenant un ou plusieurs des éléments suivants :
a. un adaptateur tournant (18) ;
b. une suspension latérale (19) ; et
c. une suspension active (14).

11. Véhicule (10) selon l'une quelconque des revendications précédentes, dans lequel le positionnement de l'ensemble de siège (1) dans le mode sécurisé implique l'entrée dans un mode de commande spécifique à des fonctions d'ensemble de siège spécifiées, le mode de commande spécifique comprenant un ou plusieurs des suivants :
a. un mode de minimisation de consommation d'énergie ;
b. un mode de minimisation d'usure ; et
c. un mode de maximisation de suspension.
